Europäisches Patentamt

European Patent Office

Office européen des brevets

(19)

(11) Numéro de publication : **0 004 227**
**B1**

(12) # FASCICULE DE BREVET EUROPÉEN

(45) Date de publication du fascicule du brevet :
17.06.81

(21) Numéro de dépôt : 79400121.4

(22) Date de dépôt : 27.02.79

(51) Int. Cl.³ : **G 01 S 3/78, G 01 J 1/42,
G 02 B 13/16, F 41 G 7/22**

(54) **Système de détection optoélectrique et de localisation angulaire d'un objet lumineux et son utilisation.**

(30) Priorité : 14.03.78 FR 7807276

(43) Date de publication de la demande :
19.09.79 (Bulletin 79/19)

(45) Mention de la délivrance du brevet :
17.06.81 Bulletin 81/24

(84) Etats contractants désignés :
DE GB IT NL SE

(56) Documents cités :
FR - A - 2 293 714
GB - A - 1 459 387
US - A - 2 961 545
US - A - 3 296 443
US - A - 3 912 859
US - A - 3 944 167
US - A - 3 982 714
US - A - 4 009 848

(73) Titulaire : THOMSON-CSF
173, Boulevard Haussmann
F-75360 Paris Cedex 08 (FR)

(72) Inventeur : Couderc, Georges
"THOMSON-CSF" - SCPI 173, bld Haussmann
F-75360 Paris Cedex 08 (FR)
Inventeur : Cojan, Yves
"THOMSON-CSF" - SCPI 173, bld Haussmann
F-75360 Paris Cedex 08 (FR)
Inventeur : Beck, Jean-Louis
"THOMSON-CSF" - SCPI 173, bld Haussmann
F-75360 Paris Cedex 08 (FR)

(74) Mandataire : Trocellier, Roger et al
"THOMSON-CSF" - SCPI 173, bld Haussmann
F-75360 Paris Cedex 08 (FR)

Imprimerie Jouve, 17, rue du Louvre, 75001 Paris, France

Appareil de détection optoélectrique et de localisation angulaire d'un objet lumineux et son utilisation

La présente invention concerne un appareil de détection optoélectrique et de localisation angulaire d'un objet lumineux.

L'invention s'applique notamment dans le domaine de la détection optoélectrique et de la poursuite d'un objet lumineux attendu constitué par une cible émettrice de lumière ou illuminée à distance ; elle s'applique avantageusement au guidage automatique d'un engin équipé d'un autodirecteur infrarouge passif.

L'invention se rapporte à la réalisation d'un appareil permettant de détecter et localiser angulairement une cible dans un champ d'observation en élaborant des signaux représentatifs du dépointage angulaire entre l'axe de visée du système et la direction de la cible. Cette dernière est généralement constituée par un objet mobile, tel 'un avion, engin, missile, char, etc. La lumière émise ou réfléchie par la cible en direction du système de détection permet de maintenir un contact optique qui peut s'effectuer en lumière infra-rouge, visible ou ultra-violette. Le champ du système récepteur optique détermine dans le plan focal une aire utile de détection qui est centrée sur l'axe optique ou axe de visée. Ainsi à chaque objet rayonnant situé dans l'angle solide de visée correspond une image sur l'aire de détection dont les coordonnées polaires ou cartésiennes sont représentatives du dépointage angulaire de l'objet par rapport à l'axe optique du système.

Dans ces appareils le récepteur optique est associé à un détecteur photoélectrique pour focaliser et détecter le rayonnement lumineux provenant du champ d'observation d'ouverture déterminée et centré sur l'axe optique de visée. Le rayonnement reçu comporte le rayonnement utile provenant de la source lumineuse à détecter lorsque celle-ci est présente dans le champ observé et le rayonnement parasite produit par des sources parasites extérieures, soit directement, soit par réflexion. La cible à détecter présente généralement une surface apparente faible dans le champ observé, compte tenu de ses dimensions propres et du fait de son éloignement vis-à-vis du dispositif détecteur. En outre, la luminance produite par la cible vers le dispositif détecteur est en général faible devant celle du rayonnement parasite provenant du fond c'est-à-dire de l'espace observé extérieur à la cible ; le rayonnement parasite comporte généralement le rayonnement solaire qui peut être très intense et le rayonnement propre du fond observé.

Ainsi, pour une direction de visée considérée l'énergie lumineuse parasite provient de la totalité de l'angle solide intéressant l'optique de réception et produit après détection un signal parasite tandis que le signal utile résulte de l'énergie lumineuse faible parvenant dans l'angle solide délimité par la surface apparente de la cible à détecter.

Le rayonnement utile est généralement connu notamment de par ses répartitions spectrale et spatiale, c'est-à-dire qu'il se trouve d'une part, situé dans la bande de longueur d'onde prévue pour l'exploitation et que, d'autre part, l'image de l'objet utile ou cible en question et qui se trouve formée par un objectif optique d'entrée du récepteur sur la surface photosensible d'un détecteur présente des caractéristiques dimensionnelles déterminées. Les répartitions spectrales et spatiales des sources parasites sont généralement bien différentes de celles correspondant à l'objet utile.

Il est connu d'accroître le rapport signal à bruit de la détection en procédant selon diverses techniques rappelées brièvement ci-après.

Une solution consiste à mettre en place un filtrage pour sélectionner le rayonnement reçu dans une bande d'exploitation choisie en relation avec le spectre d'émission de la cible à détecter. Dans de tels dispositifs le rayonnement utile sélectionné correspond à une bande spectrale très étroite en sorte d'éliminer la plus grande partie du rayonnement parasite. Le filtrage s'effectue généralement par filtre optique.

Une autre technique qui est généralement utilisée conjointement avec la précédente consiste à produire un balayage spatial de l'image de champ focalisée par un cache mobile munie de grilles ou fentes transparentes sur fond opaque. Cette technique s'adresse aux systèmes passifs où le rayonnement utile de la cible est continu. Les grilles sont déplacées dans un plan transversal à l'axe optique pour créer, par interruptions du faisceau lumineux de réception une modulation déterminée du signal détecté en aval. En outre, les dimensions des grilles sont déterminées en relation avec celles de l'image utile de l'objet à détecter pour produire un filtrage spatial destiné encore à l'élimination des sources parasites.

Le dispositif à grilles, encore appelé réticule selon la terminologie anglo-saxonne, est généralement réalisé sous forme d'un disque porteur de pistes optiques codées et entraîné en rotation uniforme. Il en existe différentes formes de réalisation. Suivant certaines d'entre elles, le disque porte une ou plusieurs pistes circulaires concentriques et tourne autour d'un axe décalé par rapport à l'axe optique et parallèle à celui-ci. Le dispositif détecteur photoélectrique en aval peut comporter selon le cas, un réseau de détecteurs ou un seul détecteur ; l'ensemble grilles et dispositif détecteur permet de définir le procédé d'extraction des données d'écartométrie par traitement des signaux détectés, par filtrage adapté ou corrélation. Dans ces systèmes, l'une des données d'écartométrie fournie est incrémentale, ceci étant dû à la sélection spatiale procurée par les pistes, ou par les éléments détecteurs, juxtaposés selon la direction de mesure correspondante.

Dans le cadre d'applications à des appareils passifs de poursuite infrarouge du type autodirecteurs, les impératifs sévères de tenue mécanique, de compacité et de légèreté imposent une réalisation du disque modulateur sous de faibles dimensions. Les grilles se présentent alors assez souvent sous forme de secteurs transparents et opaques alternés, de mêmes dimensions ou non, le disque étant centré sur l'axe optique. Ces solutions permettent une mesure aisée de l'argument de l'image de la cible mais pour obtenir le module, des moyens complémentaires s'avèrent nécessaires.

Dans les appareils semi-actifs, le rayonnement utile à détecter est produit par une source émettrice extérieure qui illumine la cible. Le spectre optique d'émission est donc connu et filtré à la réception. Le rayonnement utile est généralement modulé, par exemple le cas d'un laser à impulsions, ou d'un laser continu modulé, et la structure du dispositif récepteur optique ne nécessite plus alors de grilles modulatrices et se trouve simplifiée. Par contre, le dispositif détecteur et les circuits en aval doivent être déterminés pour produire l'écartométrie de cible. Une solution intéressante connue utilise un dispositif détecteur à quatre quadrants et quatre voies de réception pour le traitement et l'écartométrie des signaux détectés ; cette solution procure une mesure fine, continue, linéaire dans une plage d'écart déterminée correspondant au champ observé.

Dans tous ces appareils, passifs ou semi-actifs, les signaux d'acartométrie correspondant aux coordonnées polaires ou cartésiennes de l'image de la cible sont utilisés ensuite en fonction de l'application envisagée ; ils peuvent servir notamment à produire une visualisation ou un asservissement de l'axe optique de visée du système sur la direction de l'objectif assigné.

Il est connu également par le brevet US 3 944 167, un appareil passif qui combine les techniques précitées, ce qui permet de séparer les fonctions de filtrage spatial et de modulation dues aux grilles de celle d'écartométrie qui se trouvent reportées au niveau du détecteur. L'appareil comporte un objectif optique de réception et de focalisation du rayonnement provenant du champ observé, un filtre optique sélectionnant le rayonnement utile prévu, un disque tournant autour de l'axe optique de l'objectif et porteur de grilles de filtrage spatial disposées dans le plan focal de l'objectif, les grilles comportant des secteurs transparents et opaques alternés produisant une fréquence de modulation, une optique intermédiaire de transposition d'image, un dispositif photo-détecteur du type à quatre quadrants, et des circuits de traitement et d'écartométrie des quatre voies de réception pour démoduler les signaux détectés et élaborer les signaux d'écart représentatifs du dépointage angulaire de l'objet par rapport à l'axe optique de visée.

En fait, dans cet appareil connu le filtre optique comporte une zone principale pour le filtrage infrarouge utile et une zone périphérique réduite pour filtrer dans une autre bande spectrale en vue de détection de cibles parasites. Le disque comporte également une portion de secteur périphérique correspondant au filtre et entièrement transparent, et le détecteur est double. La séparation de zone centrale et périphérique est obtenue par une mesure bi-spectrale à l'aide des deux filtres et des deux détecteurs.

Le but de l'invention est de mettre à profit la séparation des fonctions de filtrage spatial et de modulation de celle d'écartométrie, pour découpler mécaniquement la partie réception optique-grilles de modulation de la partie détection, ce découpage autorisant des mouvements relatifs tout en préservant le fonctionnement. L'axe optique peut ainsi subir des dépointages angulaires vis-à-vis d'une position de référence (dépointage nul) correspondant à l'axe passant par le centre du détecteur. Une situation de ce genre est présentée en particulier dans des autodirecteurs infrarouges où l'axe optique est asservi par un dispositif gyroscope.

Pour atteindre le but fixé, l'appareil de détection optoélectrique et de localisation, objet de l'invention, est caractérisé en ce qu'il comporte des moyens de déplacement relatif de l'ensemble objectif de réception-grilles par rapport à l'ensemble optique d'écartométrie-détecteur, par rotation autour d'un centre instantané de rotation coïncidant sensiblement avec le centre géométrique d'un détecteur à quatre quadrants.

L'optique intermédiaire dite d'écartométrie est déterminée en sorte de préserver la même fonction de transposition d'image lorsque le fonctionnement relatif entre les ensembles précités se trouve modifié. Le mouvement relatif étant une rotation autour du centre O du détecteur, l'optique intermédiaire est avantageusement réalisée en utilisant une lentille demi-boule ou demi-sphère dont la face plane correspond sensiblement avec le plan de détection.

Les particularités et avantages de l'invention apparaîtront au cours de la description qui suit donnée à titre d'exemple non limitatif à l'aide des figures annexées qui représentent :

— la figure 1, un diagramme général simplifié d'un appareil de détection et de localisation de type connu précité ;

— la figure 2, un schéma du dispositif détecteur photo-électrique utilisé :

— les figures 3 à 5, des schémas de réalisation du dispositif de filtrage spatial et de modulation sous forme de disque ;

— la figure 6, un schéma simplifié du système selon la figure 1 aménagé en sorte de produire une rotation relative entre les grilles de modulation et le détecteur ;

— la figure 7, un bloc-diagramme simplifié d'une application à un appareil autodirecteur ;

— les figures 8 à 10, des schémas relatifs à la partie opto-mécanique du système selon la figure 7, et ;

— la figure 11 un diagramme des circuits électroniques de traitement et d'écartométrie d'un appareil de détection et de localisation selon les figures 4 à 10.

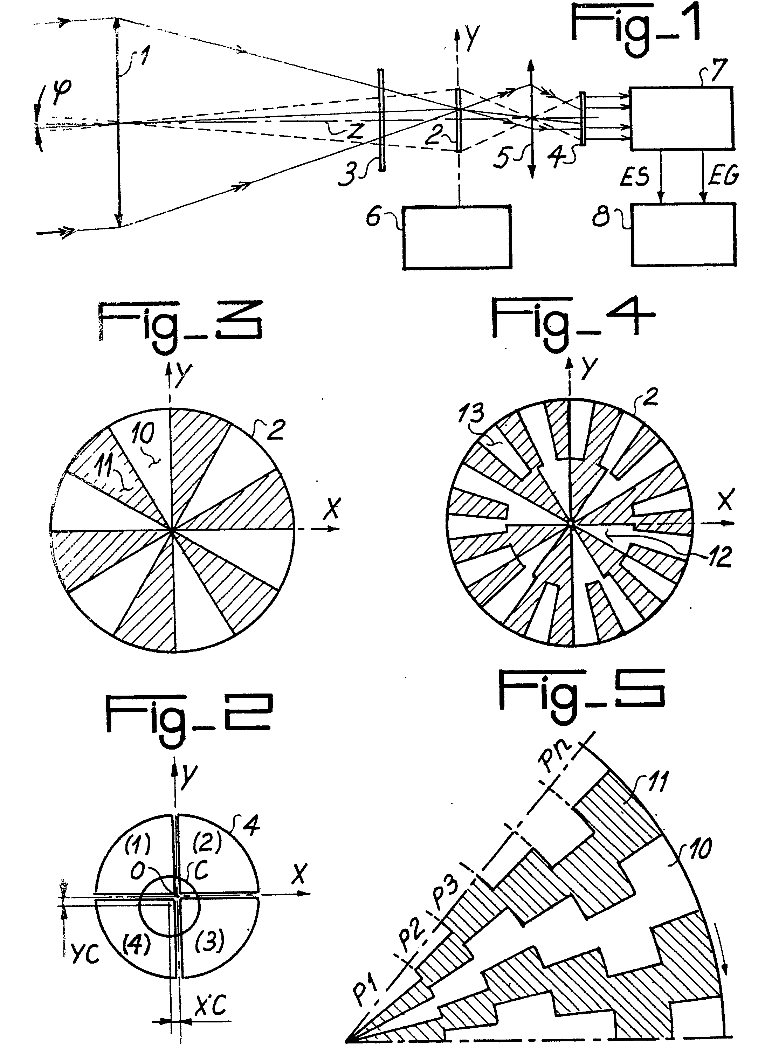

Sur le diagramme simplifié de la figure 1 se trouvent reportés les éléments essentiels d'un appareil de détection et de localisation du type connu signalé dans l'introduction qui précède. Ces éléments comprennent : un objectif optique de réception 1 symbolisé par une lentille et qui assure la focalisation du rayonnement reçu dans le champ d'observation d'ouverture φ et centré sur l'axe optique Z, un dispositif de balayage à grilles 2 situé dans le plan focal correspondant et produisant les fonctions filtrage spatial et modulation, un filtre optique 3 interposé sur le trajet des rayons pour filtrer le rayonnement inclus dans la bande utile exploitée, et un dispositif détecteur photoélectrique 4. Celui-ci est disposé à distance du plan des grilles et un objectif optique intermédiaire 5 transpose l'image du champ au niveau d'un plan voisin de celui de détection. Le bloc 6 symbolise un dispositif d'entraînement des grilles 2.

Conformément à l'invention, le dispositif détecteur 4 utilisé comporte un détecteur du type à quatre quadrants (1) (2) (3) (4) représenté à titre de rappel sur la figure 2. Les quadrants sont connectés respectivement à des circuits de réception 7 comportant quatre voies d'entrée. Les signaux détectés dans chaque voie sont traités par filtrage en fonction de la modulation créée par les grilles, et par sommation et différence pour l'ensemble des voies pour produire la mesure d'écartométrie. Les signaux d'écartométrie au nombre de deux correspondent généralement à l'écart en site ES et à l'écart en gisement EG de la cible par rapport à l'axe de visée optique Z ; ils sont transmis à une unité d'exploitation annexe 8. Les signaux d'écartométrie ES et EG correspondent respectivement aux coordonnées YC et XC du centre de la tache image C de cible par rapport aux axes cartésiens OY, considéré vertical, et OX horizontal. Le point 0 centre du détecteur, correspond à la trace de l'axe optique Z perpendiculaire au plan détecteur.

Les grilles mobiles 2 peuvent être réalisées sous forme d'une unique piste circulaire portant des zones opaques et transparentes de direction Y et déplacées selon la direction transverse X pour produire une modulation correspondante du faisceau focalisé. Ainsi qu'il a été dit dans le préambule, cette solution impose un disque support d'assez grande dimension et l'on considère dans ce qui suit des réalisations du type à disque centré, plus compactes et mieux utilisables dans le cadre de l'application particulière envisagée.

La figure 3 montre un mode simple de réalisation d'un disque centré sur l'axe optique. La piste unique est formée de secteurs transparents 10 et opaques 11, de même dimension, alternés. Il en résulte une modulation à une fréquence F1 déterminée par le nombre de secteurs et par la vitesse de rotation instantanée du disque.

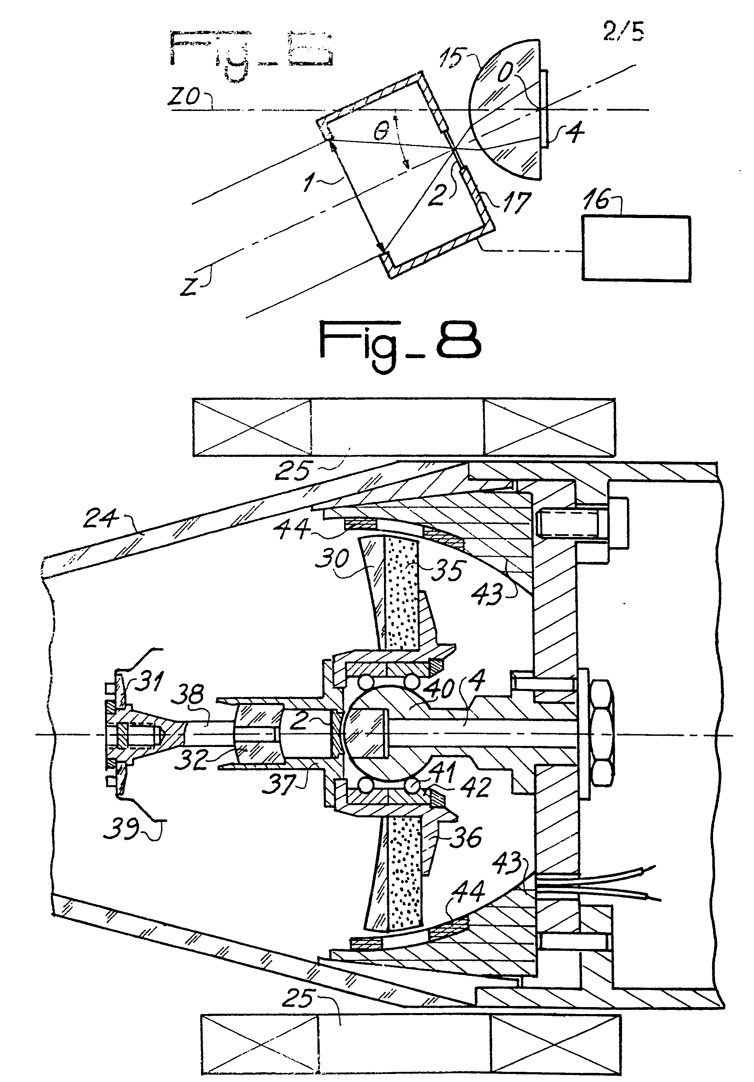

La figure 4 représente le même disque aménagé pour présenter deux pistes, une piste centrale 12 correspondant à celle décrite précédemment mais ne couvrant qu'une zone centrale délimitée et une piste circulaire 13 adjacente couvrant la zone restante de l'image de champ.

Sur cette seconde piste dite périphérique, les secteurs sont tronqués et correspondent à un angle au centre de plus faible valeur que celui des secteurs de la piste centrale. Il en résulte une seconde fréquence de modulation F2 supérieure à F1. La piste périphérique est déterminée pour obtenir un rapport k/1 entre les fréquences F2 et F1, k étant choisi supérieur à 1 et de manière à éviter des fréquences harmoniques, sur l'exemple représenté F2 = 2,5 F1. Dans ce concept, les opérations de filtrage des signaux détectés dans les circuits 7 permettent d'identifier directement la présence partielle ou totale de l'image de cible dans la zone centrale ou dans la zone périphérique et cette propriété peut être mise à profit pour préserver un bon pointage du système et diminuer les risques de perte de l'objectif visé.

La zone centrale correspond à un champ d'observation réduit, centré sur l'axe de visée Z et interne au champ total observé. Un autre avantage découlant de cette configuration de pistes est d'accroître l'homogénéité du filtrage spatial lequel ne peut être produit dans des configurations à secteurs que de manière approximative, par suite de la variation importante de largeur des zones présentée entre le centre et la périphérie du disque.

La figure 5 montre sous forme d'un schéma partiel, une variante de réalisation du graphisme des secteurs de piste 10 et 11 de la figure 3. Cette variante s'applique évidemment aussi bien à chacune des pistes 12 et 13 du disque à deux pistes selon la figure 4. Les secteurs 10 et 11 se trouvent subdivisés en plusieurs pistes P1 à Pn concentriques et décalées l'une par rapport à l'autre. Suivant l'exemple représenté le décalage angulaire présente la même valeur absolue d'une piste à la suivante et correspond à un déphasage de $\pi/2$ entre les modulations correspondantes de même fréquence F1 ; le sens du décalage a été choisi pour obtenir successivement les déphasages $\pi/2$, $\pi$, $3\pi/2$, $2\pi$ ou 0 et ainsi de suite par rapport à une piste initiale considérée, ainsi la variation du signal peut présenter une loi sensiblement sinusoïdale pour un déplacement radial rapide de l'image de cible. Cette configuration permet une diminution importante des ambiguïtés de détection ou fausses alarmes par un filtrage spatial très efficace des sources parasites de grande dimension qui présentent une image orientée radialement et qui seraient par suite susceptibles d'être détectées comme signal utile ; en outre une plus grande homogénéité du signal utile est obtenue compte tenu que dans les configurations précédentes la modulation peut se trouver altérée en fonction de la vitesse d'évolution et de la trajectoire de la cible, notamment dans le cas de trajectoires radiales rapides passant près du centre de rotation.

Compte tenu de la séparation de fonctions de filtrage spatial et de modulation par les grilles et de la fonction d'écartométrie par le détecteur et les circuits, il n'est pas nécessaire de synchroniser entre eux le défilement des grilles et la démodulation obtenue par filtrage de fréquence.

La figure 6 représente un aménagement de l'appareil selon la figure 1 dans le but de mettre à profit la séparation des fonctions qui autorise un découplage mécanique entre la partie optique de réception-grilles et la partie optique intermédiaire-détecteur. L'optique intermédiaire dite d'écartométrie est déterminée en sorte de préserver la même fonction de transposition d'image lorsque le positionnement relatif entre les parties précitées se trouve modifié. Le mouvement relatif envisagé est un mouvement de rotation autour du centre O du plan détecteur. L'optique intermédiaire est réalisée sous forme d'une lentille plan-convexe 15 dont le centre de courbure de la face convexe coïncide avec le centre instantané de rotation O et dont la face plane constitue un plan diamétral, ou sensiblement, de la sphère correspondante centrée en O. Cet élément optique, dit lentille demi-boule ou demi-sphère, se présente de même manière vis-à-vis des grilles 2 lorsque l'axe optique Z est décalé par rapport à l'axe Zo normal au plan détecteur 4 en O, ce plan coïncidant avec la face plane de l'élément 15 ou étant situé à proximité. Le montage autorise un débattement angulaire θ important entre les axes Z et Zo variant, dans une plage correspondant à un angle solide de demi-angle au sommet important, atteignant par exemple aisément 30° dans le cas de verres d'indice de réfraction de l'ordre de 1,5 pour le rayonnement utile considéré. Le mouvement relatif requiert des moyens d'entraînement 16 de l'une des parties par rapport à l'autre. Dans l'exemple figuré, l'ensemble 1-2 est rendu solidaire par une structure mécanique 17 et est entraîné en rotation autour du point O pour produire le dépointage θ désiré entre les axes Z et Zo ; en outre, les grilles 2 doivent être entraînées en rotation autour de l'axe Z et le dispositif 16 peut être conçu pour produire complémentairement cette rotation par entraînement de l'ensemble 1-2 par la structure 17. La tache de l'image utile de cible sur le détecteur sera circulaire ou elliptique selon que le dépointage θ est nul ou non, la forme elliptique étant due à une inclinaison non orthogonale du plan détecteur par rapport à l'axe optique Z. En considérant, que le champ observé est inchangé, la direction de visée Z étant fixe et la direction Zo variable, le barycentre énergétique de la tache image reste inchangé car la distribution énergétique respective sur les quatre quadrants n'est pas modifiée. Le flux lumineux provenant de la cible est constant au niveau de la détection, ce flux étant modulé par les grilles ; les signaux détectés sur chaque quadrant sont indépendants du dépointage θ et la mesure d'écartométrie reste inchangée.

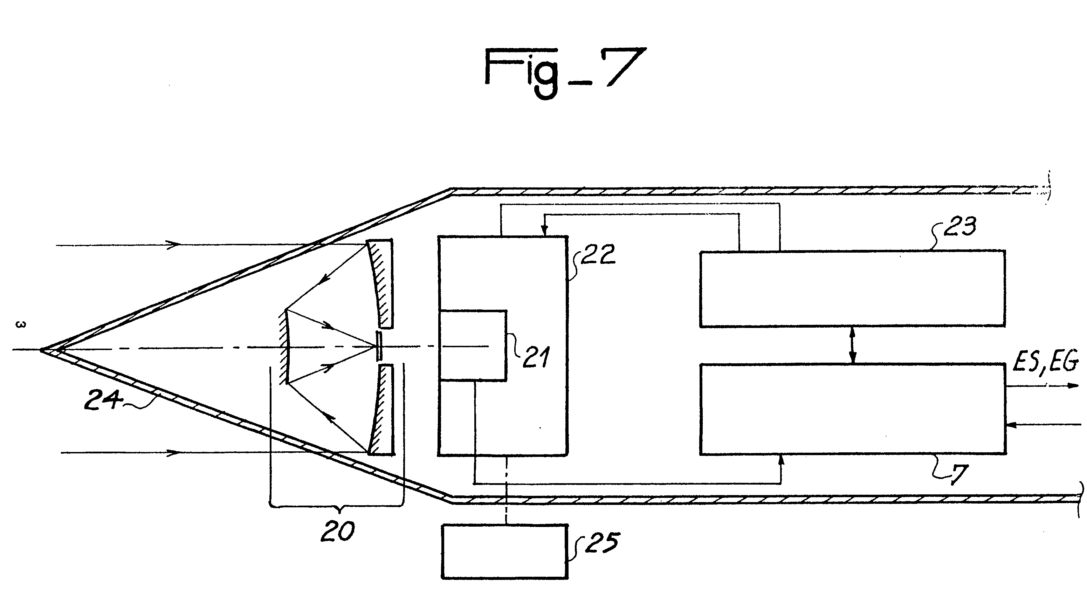

Les figures 7 et suivantes se rapportent à un exemple d'application d'un appareil selon la figure 6 à un autodirecteur. Les parties principales sont indiquées sur le bloc-diagramme général de la figure 7 et comportent l'ensemble objectif d'entrée et grilles 20, un bloc détecteur avec son dispositif de refroidissement ou cryostat 21, un gyroscope 22, les circuits de traitement et d'écartométrie 7, des circuits électroniques du gyroscope 23, un dôme de protection 24 et des moyens annexes 25 de lancement du gyroscope qui peuvent être externes au système.

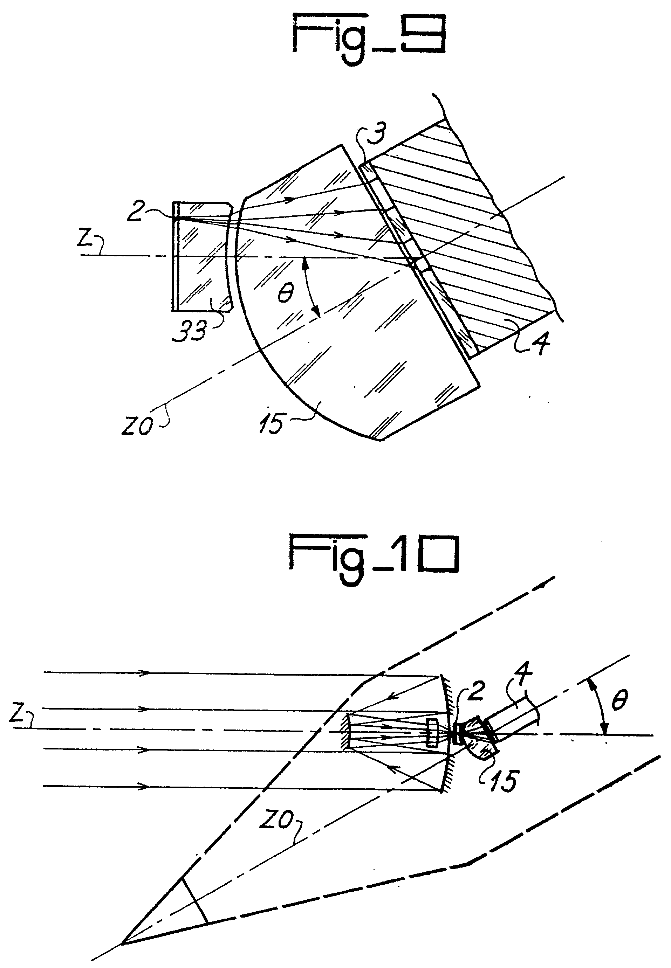

L'objectif optique d'entrée apparaît de manière plus détaillée sur les figures 8 à 10 selon une formule catadioptrique connue combinant un miroir principal 30, un miroir secondaire 31 et une lentille correctrice 32. Le miroir principal 30 est concave et évidé dans sa partie centrale, il réfléchit le rayonnement reçu vers le miroir secondaire 31 qui est convexe et réfléchit à nouveau en sens inverse le rayonnement vers le plan focal à travers l'optique 32. La formule catadioptrique retenue permet de répondre aux contraintes exigées concernant notamment : une distance focale faible afin d'utiliser un détecteur de petite dimension, une surface de pupille minimale garantie pour obtenir la portée d'accrochage de l'autodirecteur, et une qualité d'image suffisante dans la totalité du champ instantané pour effectuer un filtrage spatial efficace des sources infrarouges.

Les grilles de filtrage spatial et de modulation 2 disposées dans le plan focal sont de dimensions correspondantes au champ φ observé ; elles sont réalisées par dépôt sur un support 33 en matériau transparent pour le rayonnement utile attendu, par exemple un substrat en germanium dans le cas d'un rayonnement infrarouge envisagé. Le substrat 33 sert en outre de premier élément optique dans l'optique d'écartométrie.

L'ensemble objectif et grilles 20 est rendu solidaire de la partie tournante du gyroscope 22, la toupie d'un gyroscope à rotule centrale dans l'exemple représenté. Les pièces mécaniques de l'équipage mobile référencées figure 8 comportent un aimant 35, un fourreau 36, un premier et un second support optique 37 et 38. La pièce support 38 est fixée dans une partie centrale évidée de l'optique 32 et elle est évidée à son autre extrémité pour alléger l'ensemble ; elle supporte le miroir secondaire 32 ainsi qu'un pare-soleil 39.

Les grilles 2 ainsi que l'objectif d'entrée sont donc entraînés en rotation à la vitesse angulaire définie par le moment angulaire instantané du gyroscope, ce qui assure le filtrage spatial et la modulation des sources infrarouges dans le champ observé.

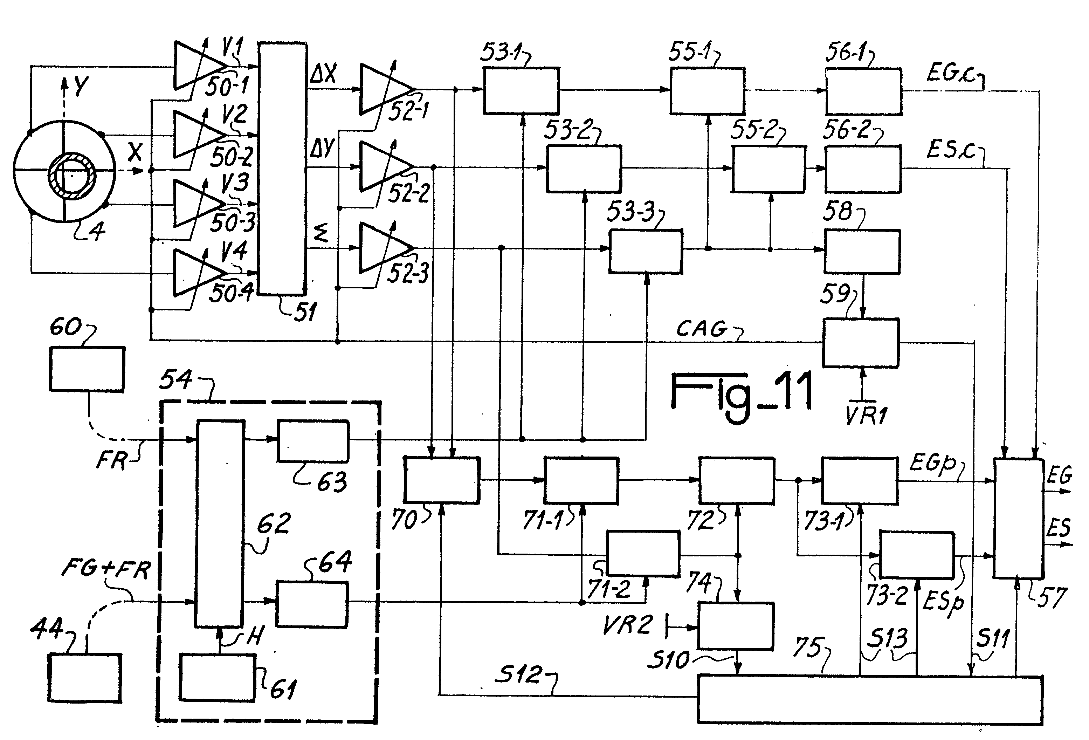

La fonction d'écartométrie qui est totalement découplée de celle des grilles est obtenue par l'association précédemment décrite d'une cellule à quatre quadrants 4 et d'un élément optique formé d'une partie de demi-boule 15. Cet ensemble est fixe par rapport au missile et se trouve implanté dans la rotule 40 du gyroscope, le centre de rotation correspondant sensiblement au centre du détecteur 4. Au cours d'un mouvement de dépointage entre l'axe optique Z et l'axe Zo correspondant à l'axe longitudinal du missile (Figure 10) l'ensemble objectif et grilles tourne relativement à l'ensemble d'écartométrie. Dans ce mouvement, toute la figure énergétique vue par la cellule reste globalement invariante car l'ensemble d'écartométrie présente une géométrie de construction respectant la symétrie ponctuelle autour du centre de rotation de l'équipage mobile.

On considère que les grilles utilisées correspondent à la configuration du disque selon la figure 4 pour différencier une zone centrale et une zone périphérique et réduire la probabilité de faux accrochages en phase recherche dans le champ total et en poursuite dans le champ central ; en outre, chaque zone est réalisée avec des pistes décalées selon la figure 5 pour accroître et homogénéiser le filtrage spatial. Les fréquences de modulation pourraient être déterminées dans un rapport k compris entre 2 et 2,5 par exemple. Cette configuration de grilles permet en outre, d'éliminer la contribution du fond dans la zone périphérique lorsque le fonctionnement s'effectue en poursuite, ainsi que de séparer par filtrage des signaux détectés un domaine d'écartométrie linéaire pour le champ central correspondant par exemple à ± 1°, et un domaine d'écartométrie saturé pour le champ périphérique pouvant s'étendre jusqu'à ± 2°, en mettant à profit le changement de la fréquence de modulation produit par le passage de l'image utile d'une zone dans l'autre.

L'optique d'écartométrie localisée entre le plan des grilles et le plan photosensible de détection peut être réalisée sous un très faible volume compatible avec les dimensions de la rotule centrale ; un exemple de réalisation se trouve représenté plus en détail sur la figure 9 qui montre la projection du faisceau lumineux issu des grilles 2 sur la cellule à quatre quadrants 4. L'ouverture de l'objectif d'entrée impose la dimension du diamètre utile du détecteur 4.

L'élément 33 est constitué par une lentille plan-concave en germanium ou un autre matériau approprié et présente une épaisseur axiale très faible. Les grilles 2 sont disposées sur la face plane et la face sphérique concave peut avoir son centre de courbure avantageusement confondu avec le centre de rotation comme c'est le cas pour la face convexe de la demi-boule 15 ; de cette façon l'espacement d'air entre les lentilles 33 et 15 est mécaniquement invariant quelque soit le dépointage θ. La lentille support 33 est solidaire de la partie mobile du gyroscope de même que l'objectif d'entrée à miroirs, l'ensemble tournant autour de l'axe optique Z. Cet élément est entraîné également autour du centre instantané de rotation constitué par le centre géométrique de la rotule 40 du gyroscope.

La lentille plan-convexe ou demi-boule 15 pourra également être usinée dans un matériau en germanium transparent aux longueurs d'ondes utiles prévues pour l'exploitation.

Le filtre optique 3 est avantageusement réalisé sous forme d'un filtre froid de faibles dimensions, consistant en un hublot plan en silicium (figure 9) dont la face arrière se situe au niveau du plan photosensible du détecteur 4 et dont la face avant est espacée du dioptre plan de sortie de la demi-boule 15 par une lame d'air de manière à assurer une rapidité en refroidissement suffisante du détecteur et du filtre. Le détecteur 4 est en effet associé de manière conventionnelle à un dispositif de refroidissement, l'ensemble occupant un volume cylindrique schématisé sur la figure 8 ; le détecteur plan proprement dit peut être réalisé par exemple en matériau antimoniure d'indium.

Le gyroscope est destiné à découpler l'axe optique des mouvements de l'axe missile Zo. La formule du gyroscope peut tout aussi bien être à cardans qu'à rotule ou autre dispositif gyroscopique. Dans la version représentée en coupe axiale sur la figure 8 le gyroscope se compose : d'une articulation à rotule à billes 40 à 42, d'une toupie gyroscopique 30 à 32 et 35 à 39, d'un solénoïde à commande de précession 43, d'un dispositif détecteur de position de la toupie 44, d'un moteur électrique de lancement. Ce dernier peut être disposé comme représenté en partie extérieur au système, les bobines 25 constituant le stator et l'aimant 35 le rotor. Les circuits électroniques de commande 23 (figure 7) sont connectés aux bobinages 43 et 25 et le capteur de position 44 est connecté aux circuits de traitement 7 recevant par ailleurs les signaux détectés. Le dispositif de lancement du gyroscope peut être conçu selon différentes autres techniques connues telles que, gyromètre lancé par ressort, ou à poudre ou utilisant des gaz comprimés.

Le dôme de protection 24 appelé irdôme ou dôme infrarouge, par analogie avec la dénomination radôme pour les ondes électromagnétiques utilisées en radar, est en un matériau transparent pour la bande spectrale d'exploitation et sa forme peut être sphérique ou pyramidale.

La partie électronique de traitement et d'écartométrie développée ci-après est envisagée dans l'hypothèse d'un lancement initial du gyroscope dont la vitesse de rotation (fréquence FG) décroît dans le temps par suite des pertes mécaniques et dans l'hypothèse complémentaire que l'autodirecteur est installé à bord d'un missile présentant une rotation en roulis uniforme (fréquence FR). Ceci n'exclut pas les autres cas de fonctionnement à vitesse de rotation constante du gyroscope et avec absence de roulis.

Le traitement électronique des signaux détectés produit les fonctions principales suivantes : pré-amplification et amplification des signaux délivrés par les quatre quadrants du détecteur avec un contrôle continu de gain des voies ; élaboration des voies écarts ΔX, ΔY et somme Σ ; filtrage dans une bande de fréquence étroite asservie à la fréquence absolue de modulation ; démodulation synchrone des voies écarts ΔX et ΔY par la voie Σ pour l'élaboration des écartométries autodirecteur et missile ; post-intégration par filtrage passe-bas des écartométries ; asservissement à niveau constant par contrôle de gain de la voie somme Σ et l'élaboration des signaux fonctionnels autodirecteur accroché et écartométrie saturée ; commande de la fréquence centrale d'accord des filtres ; et traitement de la voie périphérique.

Le traitement est conçu de façon à être obtenu à l'aide de circuits de technologie simple, classique et intégrables.

Le bloc diagramme de la figure 11 représente une implantation correspondante des différentes fonctions évoquées.

La position de la tache image sur le détecteur est caractéristique du dépointage ε du but dans le champ instantané. Chaque quadrant va donc intercepter une fraction de l'énergie lumineuse, fonction des angles ε site et ε gisement à mesurer auxquels correspondent les coordonnées YC et XC du centre de la tache image (figure 2).

Le courant de signal délivré par un quadrant est proportionnel à l'énergie lumineuse qu'il reçoit. Après préamplification dans les circuits préamplificateurs 50-1 à 50-4, les signaux des quatre voies $V_1$, $V_2$, $V_3$, $V_4$ sont traités. L'écartométrie site est directement liée à la différence ΔY des signaux $(V_1 + V_2)$ et $(V_3 + V_4)$ et l'écartométrie gisement à la différence ΔX des signaux $(V_1 + V_4)$ et $(V_2 + V_3)$.

Afin de s'affranchir des variations de ces différences dues à la puissance totale reçue par la cellule (représentée par $V_1 + V_2 + V_3 + V_4$) les signaux d'écartométrie pris en compte sont :

— écartométrie
$$\text{site ES} = \frac{(V_1 - V_3) + (V_2 - V_4)}{V_1 + V_2 + V_3 + V_4} = \frac{\Delta Y}{\Sigma}$$

— écartométrie
$$\text{gisement EG} = \frac{(V_1 - V_3) - (V_2 - V_4)}{V_1 + V_2 + V_3 + V_4} = \frac{\Delta X}{\Sigma}$$

Les écartométries sont alors des fonctions bornées des deux angles εS et εG précédents, leurs bornes étant +1 et −1. Pour un dépointage angulaire nul ε = 0, εS = εG = 0 et ES = EG = 0 en considérant que les chaînes de détection et d'amplification sont identiques.

Le principe d'élaboration des écartométries retenu consiste à asservir le niveau du signal de la voie somme représentant l'énergie totale reçue par les quatre quadrants du détecteur, à un niveau de référence. La démodulation des voies écarts ΔX, ΔY donne les écartométries à gradient constant. Cette solution est préférée à l'utilisation de diviseurs de normalisation, car elle permet, en utilisant la fonction contrôle de gain indispensable, de travailler à des niveaux optimaux sur les étages de filtrage et de démodulation et d'obtenir simplement les signaux d'écarts de l'autodirecteur.

Le circuit 51 comporte des sommateurs produisant par somme et différence, les signaux ΔX, ΔY et ε qui sont ensuite amplifiés par les amplificateurs 52-1 à 3 avant application aux circuits filtres 53-1 à 3 de la voie réceptrice centrale ainsi dénommée par analogie avec la piste centrale du disque. Les signaux amplifiés sont transmis simultanément aux circuits de la voie périphérique correspondant à la piste périphérique du disque et qui sera décrite ultérieurement. Les filtres 53 sont du type filtre asservi à commande digitale, ils sont commandés à partir d'un circuit de commande de fréquence d'accord 54 en sorte de présenter une fréquence centrale d'accord correspondant à la fréquence de modulation F1 produite par la piste centrale. Si N représente le nombre de paires de secteurs et FG la fréquence de rotation absolue du gyroscope, on a la relation F1 = N × FG. Les filtres asservis 53 sont sélectifs, leur bande passante pouvant être par exemple de 200 Hz et la fréquence centrale F1 variant dans une plage centrée sur 4 KHz environ. Les sorties filtrées des voies ΔX et ΔY sont appliquées aux démodulateurs synchrones 55-1 et 2 qui reçoivent par une deuxième entrée le signal somme Σ après filtrage. Afin d'améliorer le rapport signal à bruit les signaux sensiblement continus d'écart délivrés par les démodulateurs 55 sont appliqués aux circuits filtre passe-bas 56-1 et 2 qui produisent une post-intégration, la bande passante de ces filtres étant très étroite, par exemple de 0 à 30 Hz. Les signaux d'écart ESc et EGc de la voie centrale finalement obtenus sont transmis au circuit sélecteur 57. Le contrôle continu de gain des voies et l'asservissement de niveau de la voie somme est obtenu en appliquant le signal filtré à un détecteur de niveau 58 puis à un comparateur 59 où le niveau détecté est comparé à un niveau de référence VR1 pour former un signal différence destiné à la commande automatique de gain (dite CAG en abrégé) des amplificateurs 50 et 52. La boucle de CAG permet de s'affranchir des variations de luminosité de la source à détecter qui risquent d'entraîner la saturation des amplificateurs, et assure une pente d'écartométrie linéaire de la voie centrale constante.

Le détecteur de position angulaire 44 du gyroscope délivre un signal à la fréquence absolue FG de rotation de la toupie augmenté en valeur et en signe de la fréquence roulis FR due à la rotation du missile autour de son axe longitudinal ZO. Le sens du roulis est tel, par exemple, que les fréquences s'additionnent. L'information fréquence roulis est donnée par un dispositif senseur annexe 60 faisant partie du missile proprement dit. Les signaux FR et FG + FR correspondants sont appliqués au circuit de commande 54 de la fréquence d'accord des filtres. Le circuit de base de temps 61 produit un signal d'horloge formé par un train d'impulsions à une fréquence FH. Le circuit 62 détermine, par comptage d'impulsions H les fréquences FR et FG + FR incidentes et adresse par les informations numériques de comptage un circuit mémoire 63 préprogrammé, lequel délivre à son tour sous forme numérique la valeur d'accord des filtres 53-1 à 3 pour filtrer la modulation F1 correspondant à N x FG. En considérant des signaux incidents sinusoïdaux, le circuit 62 peut être conçu à l'aide de circuits d'écrêtage des signaux d'entrée et de circuits compteurs synchronisés par l'horloge H. Le circuit de commande 54 comporte un deuxième circuit mémoire 64 analogue au précédent pour commander l'accord des filtres 71-1 et 2 de la voie périphérique à la fréquence F2 de la piste périphérique . Chacun des circuits mémoire 63 et 64 peut être réalisé à l'aide de mémoires PROM programmées et combinées en sorte de produire l'information F1 et F2 respectivement avec une tolérance prédéterminée, en sorte de stocker un nombre limité d'informations numériques dans les mémoires. Une telle réalisation n'est pas décrite dans le détail, se situant hors de l'objet de l'invention et étant fonction de l'algorithme utilisé.

La voie périphérique est constituée de manière analogue à la voie centrale à quelques détails près, elle reçoit à l'entrée les signaux des voies ΔX, ΔY et Σ après amplification. Les voies ΔX, ΔY sont réduites à une voie par un circuit d'aiguillage 70 qui commute alternativement les signaux vers le circuit filtre asservi 71-1 suivi comme précédemment d'un démodulateur synchrone 72 dont la sortie est connectée en parallèle à l'entrée de deux circuits mémoires, 73-1 pour la voie ΔX et 73-2 pour la voie ΔY. La voie somme Σ comporte également un filtre asservi 71-2 et un circuit de comparaison à un seuil VR2 qui délivre en sortie un signal S10 de valeur 1 ou 0 selon que le seuil est dépassé ou non, c'est-à-dire que la valeur 1 est significative de la présence de la tache image de cible dans la zone périphérique. De même les moyens de comparaison 59 de la voie centrale élaborent un signal S11 de valeur 1 lorsque le niveau Σ de la voie centrale est supérieur au seuil fixé et qui indique la présence de la tache image dans la zone centrale. Les signaux S10 et S11 commandent un circuit logique de décision 75, lequel commande à son tour la mise en circuit ou non de la voie périphérique. Lorsque S10 = 0 et S11 = 1, la sortie S12 commande le circuit d'aiguillage 70 en position arrêt, les données ΔX, ΔY ne sont pas transmises à la voie périphérique. Par contre, lorsque S10 = 1 et S11 = 0 la sortie S12 commande alternativement la connexion des voies ΔX et ΔY à l'entrée du filtre 71-1 et la mise en mémoire correspondante s'effectue en synchronisme par une sortie de commande S13. La logique de décision 75 peut être réalisée aisément à l'aide de circuits portes logiques et avec une horloge locale pour cadencer la commutation de voie en 70 puis la mise en mémoire en 73-1 et 2. Les signaux d'écartométrie EGp et ESp de la voie périphérique sont transmis au circuit sélecteur 57 qui est commandé également par le circuit logique 75 pour délivrer les signaux d'écart EG et ES de la voie centrale ou périphérique selon le cas. L'écartométrie produite par la voie périphérique est du type tout ou rien. Les signaux EG et ES sont transmis pour utilisation au missile pour assurer une navigation proportionnelle en modifiant la trajectoire ; ils sont transmis par ailleurs au gyroscope de l'autodirecteur, aux bobines de précession 43 via les circuits 23, pour effectuer le ralliement de l'axe de la toupie au but.

Dans le concept où le missile ne présente pas de roulis (FR = 0), le circuit de commande d'accord 54 se trouve simplifié d'autant, ne recevant plus que l'information FG du détecteur de position 44. Si, complémentairement la vitesse de rotation du gyroscope est maintenue constante (FG = Cte), le circuit de commande 54 est supprimé, les filtres 53-1 à 3 et 73-1 et 2 sont des filtres à fréquence fixe, accordés sur les valeurs F1 et F2 prévues respectivement pour chaque voie.

La réalisation décrite s'applique avantageusement à un autodirecteur infrarouge passif, il faut néanmoins considérer que cette application n'est pas limitative. Le système peut par exemple être installé au sol et la structure très simplifiée si l'on n'envisage pas de mouvement relatif entre l'ensemble objectif d'entrée-grilles et la partie détectrice.

## Revendications

1. Appareil de détection optoélectrique et de localisation angulaire d'un objet lumineux, comportant successivement : un objectif optique de réception et de focalisation du rayonnement provenant du champ observé, un filtre optique sélectionnant le rayonnement utile prévu, un disque tournant autour de l'axe optique de l'objectif et porteur de grilles de filtrage spatial disposées dans le plan focal de l'objectif, les grilles étant formées de secteurs transparents et opaques alternés produisant une fréquence de modulation, une optique intermédiaire de transposition d'images dite d'écartométrie, un dispositif photo-détecteur du type à quatre quadrants, et des circuits de traitement et d'écartométrie des quatre voies de réception pour démoduler par filtrage les signaux détectés et élaborer les signaux d'écart représentatifs du dépointage angulaire de l'objet par rapport à l'axe optique de visée, caractérisé en ce qu'il comporte en outre, des moyens de déplacement relatif (16) de l'ensemble objectif de réception-grilles par rapport à l'ensemble optique d'écartométrie-détecteur, par rotation autour d'un centre instantané de rotation coïncidant sensiblement avec le centre géométrique de détecteur à quatre quadrants.

2. Appareil selon la revendication 1, caractérisé en ce que les secteurs transparents et opaques sont répartis en plusieurs pistes optiques concentriques, une première piste (12) couvrant une zone centrale circulaire et produisant une première fréquence de modulation (F1), et au moins une deuxième piste (13) pour couvrir la zone périphérique restante de l'image du champ observé et pour produire au moins une seconde fréquence de modulation (F2) de valeur supérieure à la première fréquence.

3. Appareil selon l'une quelconque des revendications 1, 2, caractérisé en ce que les secteurs formant chaque piste de modulation sont subdivisés en une pluralité de pistes (P1 à Pn) concentriques et décalées relativement l'une par rapport à la suivante selon une loi de variation radiale prédéterminée du déphasage correspondant.

4. Appareil selon l'une quelconque des revendications 1 à 3, caractérisé en ce que l'optique d'écartométrie comporte un élément optique plan-convexe du type demi-boule (15) dont le centre de courbure de la face convexe sphérique coïncide sensiblement avec le centre géométrique du détecteur à quatre quadrants (4) et dont la face plane coïncide sensiblement avec le plan de détection.

5. Appareil selon la revendication 4, caractérisé en ce que le disque support des grilles est constitué par une lentille plan-concave (33) sur la face plane de laquelle sont disposées les grilles, et dont le centre de courbure de la face sphérique concave coïncide avec le centre instantané de rotation, les rayons de courbure de la lentille plan-concave et de la lentille demi-boule étant déterminés en sorte de ménager une lame d'air d'épaisseur constante entre ces deux lentilles et autoriser le déplacement relatif.

6. Appareil selon l'une quelconque des revendications 1 à 5 caractérisé en ce que le filtre optique (3) est réalisé sous forme d'un hublot plan déposé sur le plan photosensible du détecteur à quatre quadrants.

7. Appareil selon l'une quelconque des ensembles de revendications 4 et 6, 5 et 6, caractérisé en ce qu'une lame d'air est ménagée entre la face plane de la lentille demi-boule et la face correspondante du hublot filtre placé vis-à-vis.

8. Appareil selon l'une quelconque des revendications 1 à 7, caractérisé en ce que l'ensemble objectif de réception-grilles (20) est supporté par la partie mobile en rotation d'un gyroscope (22) et l'ensemble optique d'écartométrie-détecteur par la partie centrale du gyroscope.

9. Appareil selon la revendication 8, caractérisé en ce que le gyroscope est du type à rotule à bille centrale (40, 41, 42), l'objectif de réception porté par la toupie étant du type catadioptrique composé d'un miroir principal concave (30), d'un miroir secondaire convexe (31) et d'une lentille correctrice (32), le centre instantané de rotation correspondant au centre géométrique de la rotule.

10. Appareil selon l'ensemble des revendications 1 et 2 ou selon cet ensemble et l'une quelconque des revendications 3 à 9, caractérisé en ce que les circuits de traitement et d'écartométrie comportent 4 voies de réception issues du détecteur (4) et traitées par sommation dans un circuit (51) pour produire les signaux conventionnels $\Delta X$, $\Delta Y$, et $\Delta\Sigma$ d'écartométrie, ces derniers signaux étant transmis parallèlement à une voie de circuits dite centrale et à une voie dite périphérique dans lesquelles des circuits de filtrage (53-1 à 3, 71- et 2) assurent respectivement le filtrage de la fréquence de modulation correspondante de la piste centrale et de la piste périphérique, les circuits de la voie centrale élaborent une mesure d'écartométrie de type linéaire et ceux de la voie périphérique une mesure du type tout ou rien.

11. Appareil selon la revendication 10, caractérisé en ce que le circuit sommateur (51) est précédé de pré-amplificateurs (50-1 à 4) et suivi d'amplificateurs (52-1 à 3), du type à gain variable commandés par le signal somme $\Sigma$ après traitement dans un circuit de détection de niveau (58) suivi d'un circuit comparateur à seuil (59), les circuits filtres sont du type accordable à commande numérique, leur commande s'effectuant à partir d'un circuit (54) recevant l'information de fréquence de rotation (FG) de la toupie d'un détecteur de position (44) monté sur le gyroscope.

12. Appareil selon l'une quelconque des revendications 6 à 11, caractérisé en ce que le détecteur et le filtre optique sont refroidis par un cryostat.

13. Utilisation de l'appareil selon la revendication 12 pour former un auto-directeur passif, le rayonnement utile se situant dans le domaine infrarouge caractérisé en ce que l'optique d'écartométrie est en matériau germanium, le filtre optique en silicium et le détecteur en antimoniure d'indium.

**Claims**

1. Apparatus for the optoelectrical detection and determination of the angular deviation of a luminous object comprising in succession the following : an optical objective for receiving and focusing the radiation originating from the observed field, an optical filter which selects the intended useful radiation, a disc which rotates about the optical axis of the objective and which carries spatial filter gratings which are disposed in the focal plane of the objective and which consist of alternate transparent and opaque sectors and produce a modulation frequency, an intermediate optical system for image displacement, i.e. a so called deviation measuring optical system, a photodetector means of the four-quadrant detector type, and processing and deviation measuring circuits having four reception channels which demodulate the detected signals by filters and produce deviation signals which represent the angular deviation of the object from the optical visual axis, characterised by means (16) for the relative displacement of the arrangement comprising the receiving objective and the filter gratings with respect to the arrangement comprising the deviation measuring optical system and the photodetector by rotation about an instantaneous rotation centre which substantially coincides with the geometric centre of the four-quadrant detector.

2. Apparatus according to claim 1, characterised in that the transparent and the opaque sectors are distributed on a plurality of concentric optical paths, a first path (12) covering a circular centre zone and producing a first modulation frequency (F1) whilst at least a second path (13) covers the remaining peripheral zone of the image of the observed field and produces at least one second modulation frequency (F2) of greater value than the first frequency.

3. Apparatus according to claim 1 or 2, characterised in that the sectors forming each modulation path are subdivised into a plurality of paths (P1 to Pn) which extend concentrically and are offset with respect to the next path corresponding to a predetermined radial phase displacement law.

4. Apparatus according to any one of claims 1 to 3, characterised in that the deviation measuring optical system comprises a hemispherical plane-convex optical element (15) in which the centre of curvature of the convex spherical surface substantially coincides with the geometric centre of the four-quadrant detector (4) and the planar surface substantially coincides with the detection plane.

5. Apparatus according to claim 4, characterised in that the grating carrier disc is formed by a plane-concave lens (33) on the planar surface of which the filter gratings are disposed and in which the centre of curvature of the concave spherical surface coincides, with the instantaneous rotation centre, the curvature radii of the plane-concave lens and the hemispherical lens being fixed so that between the two lenses an air layer of constant thickness arises and relative displacement is possible.

6. Apparatus according to any one of claims 1 to 5, characterised in that the optical filter (3) is made in the form of a planar window which is disposed in the photosensitive plane of the four-quadrant detector.

7. Apparatus according to claim groups 4 and 6 or 5 and 6, characterised in that between the planar surface of the hemispherical lens and the corresponding surface of the filter window disposed opposite an air layer is formed.

8. Apparatus according to any one of claims 1 to 7, characterised in that the arrangement (20) comprising the receiving objective and the filter gratings is carried by the rotatable part of a gyroscope (22) and that the arrangement comprising the deviation measuring optical system and the photodetector is carried by the centre part of the gyroscope.

9. Apparatus according to claim 8, characterised in that the gyroscope is a gyroscope having a pivotal bearing with centre sphere (40, 41, 42) and that the receiving objective which includes a concave main mirror (30), a convex secondary mirror (31) and a correction lens (32), the instantaneous rotation centre corresponding to the geometric centre of the pivotal bearing.

10. Apparatus according to the group of claims 1 and 2 or said claim group and one of claims 3 to 9, characterised in that the processing and deviation measuring circuits comprise four reception channels which originate from the detector (4) and by summation in a circuit (51) are processed so that the conventional deviation signals $\Delta X$, $\Delta Y$ and $\Delta \Sigma$ are produced, said signals being transmitted parallel to a circuit channel designated central channel and a circuit channel designated peripheral channel wherein filter circuits (53-1 to 3,71- and 2) ensure the filtering of the modulation frequency corresponding to the central path and the peripheral path, and that the circuits of the central channel perform a linear deviation measurement whereas the circuits of the peripheral channel perform a binary measurement.

11. Apparatus according to claim 10, characterised in that the summation circuit (51) is preceded by preamplifiers (50-1 to 4) and followed by amplifiers (52-1 to 3), the preamplifiers and the amplifiers having a variable gain which is controlled by the sum signal $\Sigma$ after the latter has been processed in a level detector circuit (58) which is followed by a comparator circuit with threshold value (59), and that the filter circuits may be tuned by means of digital control, the control thereof being conducted by means of a circuit (54) which receives the rotation frequency information (FG) of the rotating part from a position detector (44) which is disposed on the gyroscope.

12. Apparatus according to any one of claims 6 to 11, characterised in that the detector and the optical filter are cooled by a cryostat.

13. Use of the apparatus according to claim 12 for forming a passive self-guiding means, the useful radiation lying in the infrared range, characterised in that the deviation measuring optical system consists of germanium, that the optical filter consists of silicon and that the detector consists of indium antimonide.

**Ansprüche**

1. Vorrichtung zur optoelektrischen Detektion und zur Bestimmung der Winkelablage eines leuchtenden Objekts, die nacheinander folgendes enthält: Ein optisches Objektiv zum Empfangen und Fokussieren der vom beobachteten Feld ausgehenden Strahlung, ein optisches Filter, das die vorgesehene Nutzstrahlung auswählt, eine sich um die optische Achse des Objektivs drehende Scheibe, die in der Brennebene des Objektivs liegende räumliche Filtergitter trägt, die aus abwechselnden lichtdurchlässigen und lichtundurchlässigen Sektoren bestehen und eine Modulationsfrequenz erzeugen, eine Zwischenoptik zur Bildverschiebung, nämlich eine sogenannte Ablagemeßoptik, eine Photodetektor-Vorrichtung vom Typ eines Vierquadrantendetektors, sowie Verarbeitungs- und Ablagemeßschaltungen mit vier Empfangskanälen, die die festgestellten Signale durch Filtern demodulieren und Ablagesignale erzeugen, die die Winkelablage des Objekts von der optischen Zielachse repräsentieren, gekennzeichnet durch Vorrichtungen (16) zum relativen Verschieben der Anordnung aus dem Empfangsobjektiv und den Filtergittern bezüglich der Anordnung aus der Ablagemeßoptik und dem Photodetektor durch Drehen um ein momentanes Rotationszentrum, das im wesentlichen mit dem geometrischen Zentrum des Vierquadrantendetektors zusammenfällt.

2. Vorrichtung nach Anspruch 1, dadurch gekennzeichnet, daß die lichtdurchlässigen und die lichtundurchlässigen Sektoren auf mehrere konzentrische optische Bahnen verteilt sind, wobei eine erste Bahn (12) eine kreisförmige Mittelzone bedeckt und eine erste Modulationsfrequenz (F1) erzeugt, während wenigstens eine zweite Bahn (13) die verbleibende Umfangszone des Bildes des beobachteten Feldes bedeckt und wenigstens eine zweite Modulationsfrequenz (F2) mit größerem Wert als die erste Frequenz erzeugt.

3. Vorrichtung nach Anspruch 1 oder 2, dadurch gekennzeichnet, daß die jede Modulationsbahn bildenden Sektoren in mehrere Bahnen (P1 bis Pn) unterteilt sind, die konzentrisch verlaufen und bezüglich der jeweils nächsten Bahn entsprechend einer vorbestimmten radialen Phasenverschiebungs-Gesetzmäßigkeit versetzt sind.

4. Vorrichtung nach einem der Ansprüche 1 bis 3, dadurch gekennzeichnet, daß die Ablagemeßoptik ein halbkugelförmiges, plankonvexes optisches Element (15) enthält, bei dem der Krümmungsmittelpunkt der konvexen Kugelfläche im wesentlichen mit dem geometrischen Zentrum des Vierquadrantendetektors (4) zusammenfällt und bei dem die ebene Fläche im wesentlichen mit der Detektionsebene zusammenfällt.

5. Vorrichtung nach Anspruch 4, dadurch gekennzeichnet, daß die Gitterträgerscheibe von einer plankonkaven Linse (33) gebildet ist, auf deren ebener Fläche die Filtergitter angebracht sind und bei der der Krümmungsmittelpunkt der konkaven Kugelfläche mit dem momentanen Rotationszentrum zusammenfällt, wobei die Krümmungsradien der plankonkaven Linse und der halbkugelförmigen Linse so festgelegt sind, daß zwischen den beiden Linsen eine Luftschicht mit konstanter Dicke entsteht und daß die Relativverschiebung möglich ist.

6. Vorrichtung nach einem der Ansprüche 1 bis 5, dadurch gekennzeichnet, daß das optische Filter (3) in Form eines ebenen Fensters ausgeführt ist, das in der photoempfindlichen Ebene des Vierquadrantendetektors angeordnet ist.

7. Vorrichtung nach den Anspruchsgruppen 4 und 6 oder 5 und 6, dadurch gekennzeichnet, daß zwischen der ebenen Fläche der halbkugelförmigen Linse und der entsprechenden Fläche des gegenüber angeordneten Filterfensters eine Luftschicht gebildet ist.

8. Vorrichtung nach einem der Ansprüche 1 bis 7, dadurch gekennzeichnet, daß die Anordnung (20) aus dem Empfangsobjektiv und den Filtergittern vom drehbeweglichen Teil eines Gyroskops (22) getragen wird und daß die Anordnung aus der Ablagemeßoptik und dem Photodetektor vom Mittelteil des Gyroskops getragen wird.

9. Vorrichtung nach Anspruch 8, dadurch gekennzeichnet, daß das Gyroskop ein Gyroskop mit Gelenklager mit Mittelkugel (40, 41, 42) ist und daß das vom Kreisel getragene Empfangsobjektiv ein katadioptrisches Objektiv ist, das einen konkaven Hauptspiegel (30), einen konvexen Sekundärspiegel (31) und eine Korrekturlinse (32) enthält, wobei das momentane Rotationszentrum dem geometrischen Zentrum des Gelenklagers entspricht.

10. Vorrichtung nach der Gruppe der Ansprüche 1 und 2 oder nach dieser Anspruchsgruppe und einem der Ansprüche 3 bis 9, dadurch gekennzeichnet, daß die Verarbeitungs- und Ablagemeßschaltungen vier Empfangskanäle enthalten, die vom Detektor (4) ausgehen und durch Summieren in einer Schaltung (51) so verarbeitet werden, daß die herkömmlichen Ablagesignale $\Delta X$, $\Delta Y$ und $\Delta \Sigma$ erzeugt werden, wobei diese Signale parallel zu einem als Zentralkanal bezeichneten Schaltungskanal und zu einem als Peripheriekanal bezeichneten Schaltungskanal übertragen werden, worin Filterschaltungen (53-1 bis 3, 71- und 2) das Filtern der der zentralen Bahn und der peripheren Bahn entsprechenden Modulationsfrequenz gewährleisten, und daß die Schaltungen des Zentralkanals eine lineare Ablagemessung durchführen, während die Schaltungen des Peripheriekanals eine binäre Messung durchführen.

11. Vorrichtung nach Anspruch 10, dadurch gekennzeichnet, daß der Summierschaltung (51) Vorverstärker (50-1 bis 4) vorgeschaltet sind und Verstärker (52-1 bis 3) nachgeschaltet sind, wobei die Vorverstärker und die Verstärker einen variablen Verstärkungsfaktor haben, der vom Summensignal $\Sigma$ gesteuert wird, nachdem dieses in einer Pegeldetektorschaltung (58) verarbeitet worden ist, an die sich eine Komparatorschaltung mit Schwellenwert (59) anschließt, und daß die Filterschaltungen mittels digitaler Steuerung abstimmbar sind, wobei ihre Steuerung mittels einer Schaltung (54) durchgeführt wird, die die Rotationsfrequenzinformation (FG) des Kreisels aus einem Positionsdetektor (44) empfängt, der am Gyroskop angebracht ist.

12. Vorrichtung nach einem der Ansprüche 6 bis 11, dadurch gekennzeichnet, daß der Detektor und das optische Filter von einem Cryostat gekühlt werden.

13. Anwendung der Vorrichtung nach Anspruch 12 zur Bildung einer passiven Selbstlenkanordnung, wobei die Nutzstrahlung im Infrarotbereich liegt, dadurch gekennzeichnet, daß die Ablagemeßoptik aus Germanium besteht, daß das optische Filter aus Silizium besteht und daß der Detektor aus Indiumantimonid besteht.

Fig_1

Fig_3

Fig_4

Fig_2

Fig_5

Fig_5

Fig_8

# Fig_7

## Fig_9

## Fig_10

Fig_11

5/5

0 004 227